# EUROPEAN PATENT APPLICATION

(11) **EP 4 852 491 A1**
(43) Date of publication of application: **09.12.2026**
(21) Application number: 24923424.6
(22) Date of filing: 31.10.2024
(51) Int. Cl.: H04W 24/02

(54) **SOLUTION ORCHESTRATION METHOD, DEVICE, AND STORAGE MEDIUM**

(30) Priority: 08.02.2024 CN 202410177589
(71) Applicant: ZTE Corporation, Shenzhen, Guangdong 518057 (CN)
(72) Inventor: XIE, Pengxiang, Shenzhen, Guangdong 518057 (CN); XIE, Baoguo, Shenzhen, Guangdong 518057 (CN); ZHU, Jinguo, Shenzhen, Guangdong 518057 (CN)
(74) Representative: Aipex B.V.
(86) International application number: PCT/CN2024/128793
(87) International publication number: WO 2025/167220

(57) **Abstract**

Provided are a solution orchestration method, a device, and a storage medium. A solution orchestration method applied to a first management device includes: generating a target intent according to received service requirement information; sending an intent negotiation request to a second management device based on the target intent to request the second management device to return a candidate collaborative processing solution set; and performing intent negotiation with the second management device based on the candidate collaborative processing solution set to determine a target collaborative processing solution set.

## Description

### TECHNICAL FIELD

The present application relates to the field of communication technologies and, in particular, to a solution orchestration method, a device, and a storage medium.

### BACKGROUND

Against the backdrop of automated and intelligent network management, a large number of artificial intelligence/machine learning (AI/ML) functions have been proposed, including Radio Access Network AI (RAN AI) capabilities, the Network Data Analytics Function (NWDAF), and the Management Data Analytics Function (MDAF). In the case where specific service requirements are proposed, when faced with numerous network models, network operators need to balance computing resources against model training/inference performance. However, for the complex inference requirements and dynamic network computing resources, network operators cannot determine the optimal collaborative processing solution in the traditional manual parameter configuration and delivery manner.

### SUMMARY

In view of this, embodiments of the present application provide a solution orchestration method, a device, and a storage medium, thereby achieving the effect of effectively determining the optimal collaborative processing solution.

The embodiments of the present application provide a solution orchestration method applied to a first management device. The solution orchestration method includes the following:

A target intent is generated according to received service requirement information.

An intent negotiation request is sent to a second management device based on the target intent to request the second management device to return a candidate collaborative processing solution set.

Intent negotiation with the second management device is performed based on the candidate collaborative processing solution set to determine a target collaborative processing solution set.

The embodiments of the present application provide a solution orchestration method applied to a second management device. The solution orchestration method includes the following:

An intent negotiation request sent by a first management device is received.

A corresponding candidate collaborative processing solution set is determined according to at least the intent negotiation request.

The candidate collaborative processing solution set is sent to the first management device to enable the first management device to perform intent negotiation with the second management device based on the candidate collaborative processing solution set to determine a target collaborative processing solution set.

The embodiments of the present application provide a communication device. The communication device includes a memory and one or more processors.

The memory is configured to store one or more programs.

The one or more programs, when executed by the one or more processors, cause the one or more processors to perform the method according to any preceding embodiment.

The embodiments of the present application provide a storage medium storing a computer program which, when executed by a processor, causes the processor to perform the method according to any preceding embodiment.

### BRIEF DESCRIPTION OF DRAWINGS

FIG. 1 is a schematic diagram illustrating the implementation of a service based management architecture in the related art.
FIG. 2 is a schematic diagram illustrating the configuration of an intent-driven management service model in the related art.
FIG. 3 is a flowchart of a solution orchestration method according to an embodiment of the present application.
FIG. 4 is a flowchart of another solution orchestration method according to an embodiment of the present application.
FIG. 5 is a diagram illustrating interaction for solution orchestration according to an embodiment of the present application.
FIG. 6 is another diagram illustrating interaction for solution orchestration according to an embodiment of the present application.
FIG. 7 is another diagram illustrating interaction for solution orchestration according to an embodiment of the present application.
FIG. 8 is another diagram illustrating interaction for solution orchestration according to an embodiment of the present application.
FIG. 9 is a block diagram of a solution orchestration apparatus according to an embodiment of the present application.
FIG. 10 is a block diagram of another solution orchestration apparatus according to an embodiment of the present application.
FIG. 11 is a diagram illustrating the structure of a communication device according to an embodiment of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

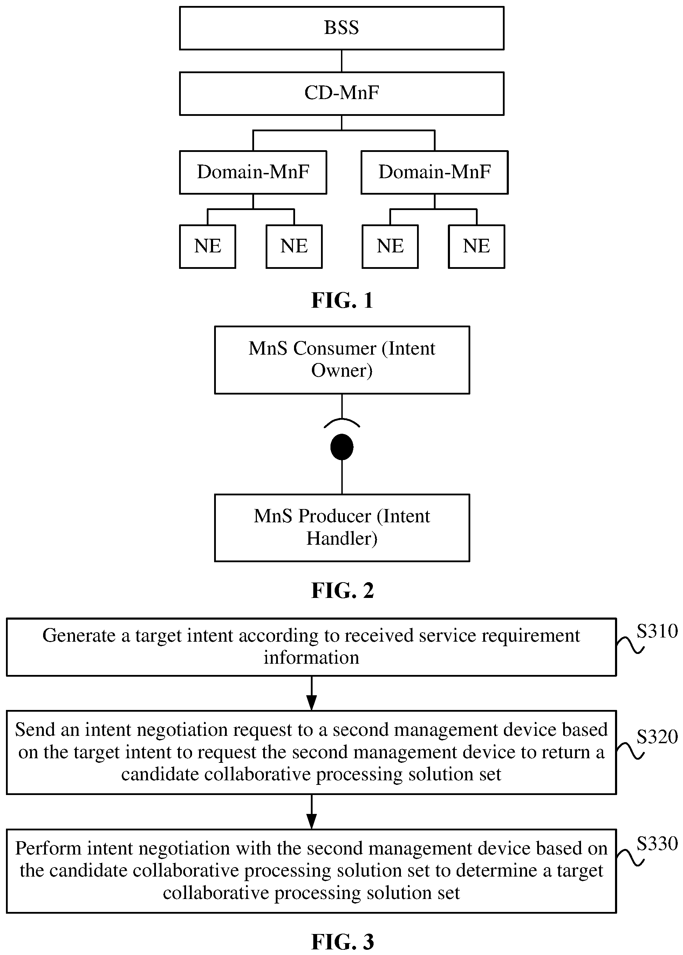

FIG. 1 is a schematic diagram illustrating the implementation of a service based management architecture in the related art. As shown in FIG. 1, the service based management architecture includes a Business Support System (BSS), a Cross-Domain Management Function (CD-MnF), Domain Management Functions (Domain-MnFs), and Network Elements (NEs). The CD-MnF is configured to manage one or more Domain-MnFs. The Domain-MnF may be configured to manage one or more NEs. The functions are briefly described below.

The BSS is oriented toward communication services and is configured to provide functions and management services such as billing, settlement, accounting, customer services, business operations, network monitoring, communication service lifecycle management, and service intent translation. The BSS may be an operation system of an operator or a vertical industry operational technology system (Vertical OT System).

The CD-MnF, also referred to as a Network Management Function (NMF), may be a network management entity such as a Network Management System (NMS), a network Management Service Producer (MnS Producer), a network Management Service Consumer (MnS Consumer), or a Network Function Management Service Consumer (NFMS_C). The CD-MnF provides one or more of the following management functions or management services: network lifecycle management, network deployment, network fault management, network performance management, network configuration management, network assurance, a network optimization function, or translation of the network intent from a communication service provider (Intent-CSP). The network referred to in the preceding management functions or management services may include one or more NEs or subnetworks or may be a network slice. In other words, the NMF may be a Network Slice Management Function (NSMF), a cross-domain Management Data Analytics Function (MDAF), a cross-domain Self-Organization Network Function (SON Function), or a cross-domain Intent-Driven Management Service (Intent-Driven MnS).

The Domain-MnF is also referred to as a Network Subnet Management Function or an NE management function. The Domain-MnF may be an NE management entity such as a Mobile Broadband (MBB) automation engine (MAE), a network Element Management System (EMS), a Network Function Management Service Provider (NFMS_P), a Network Slice Subnet Management Function (NSSMF), a Domain Management Data Analytics Function (Domain MDAF), a domain SON Function, a domain Intent-Driven MnS, an MnS Producer, or an MnS Consumer. The Domain-MnFs may be classified in the following manner: according to the network types, the Domain-MnFs may be classified into a radio access network (RAN) domain Management Function (RAN domain MnF), a Core Network domain Management Function (CN domain MnF), a Transport Network domain Management Function (TN domain MnF), and the like. It is to be noted that the Domain-MnF may also be a domain network management system, which may manage one or more of an access network, a core network, or a transport network. According to administrative regions, the Domain-MnF may be a Domain-MnF for a certain region, such as a Domain-MnF for city A and a Domain-MnF for city B. The Domain-MnF provides one or more of the following functions or management services: lifecycle management of a subnetwork or NE, deployment of a subnetwork or NE, fault management of a subnetwork or NE, performance management of a subnetwork or NE, assurance of a subnetwork or NE, an optimization function of a subnetwork or NE, or translation of the Intent from a Network Operator (Intent-NOP) of a subnetwork or NE. The subnetwork here includes one or more NEs. The subnetwork may also include subnetworks, that is, one or more subnetworks form a larger subnetwork. The subnetwork here may also be a network slice subnet.

The NE is an entity that provides network services. The NE may include a core network NE, an RAN NE, a transport network NE, or the like. Specifically, the core network NE may include, but is not limited to, an Access and Mobility Management Function (AMF) entity, a Session Management Function (SMF) entity, a Policy Control Function (PCF) entity, an NWDAF entity, a Network Repository Function (NRF), a gateway, and the like. The RAN NE may include, but is not limited to, various types of base stations (for example, the Next Generation Node B (gNB) and the Evolved Node B (eNB)), a Central Unit Control Panel (CUCP), a Central Unit (CU), a Distributed Unit (DU), a Central Unit User Panel (CUUP), and the like. In the present application, the network function (NF) is also referred to as the NE. The NE may provide one or more of the following management functions or management services: NE lifecycle management, NE deployment, NE fault management, NE performance management, NE assurance, an NE optimization function, or NE intent translation.

The CD-MnF may be used for AI/ML model training and AI/ML model inference. The Domain-MnF may be used for AI/ML model training and AI/ML model inference. The NE is an entity that provides network services, includes a core network NE and an RAN NE, and can provide at least one of the following: AI/ML model training or AI/ML model inference.

FIG. 2 is a schematic diagram illustrating the configuration of an intent-driven management service model in the related art. As shown in FIG. 2, the intent-driven management service model includes an MnS Consumer and an MnS Producer. The MnS Consumer is the Intent Owner, and the MnS Producer is the Intent Handler.

If the management service is provided by the CD-MnF, the CD-MnF is the MnS Producer, and the BSS is the MnS Consumer. If the management service is provided by the Domain-MnF, the Domain-MnF is the MnS Producer, and the CD-MnF is the MnS Consumer. When the management service is provided by the NE, the NE is the MnS Producer, and the Domain-MnF is the MnS Consumer. The intent may be an expectation with respect to an intent producer (for example, the NE) or the system in which the intent producer resides (for example, the network or subnetwork) and may include a requirement, an objective, or a constraint. The intent translation refers to the process of determining the policy of the intent. For example, the policy may be used for indicating a condition under which the intent is not satisfied. For example, when the intent is energy saving, policy A may be that energy consumption is abnormal (that is, not energy-efficient) when energy consumption exceeds a first threshold; and policy B may be that energy consumption is abnormal (that is, not energy-efficient) when energy consumption exceeds a second threshold. It is to be understood that, even for the same intent, different policies may result in different solutions that satisfy the intent.

To facilitate understanding of the implementation solution of the present application, the parameters involved in the solution of the present application are explained below.

The ML Entity is a manageable entity of an ML model.

Note 1: The ML entity may include metadata related to the ML model, and the metadata may include the applicable runtime context of the ML model.

The AI Decision Entity is an entity that makes decisions using non-ML logic and may be managed as a single composite entity.

The ML Model is a mathematical algorithm that may be "trained" using data and human expert input as examples to replicate the decisions that experts would make when presented with the same information.

The ML Model Training is a process performed by the ML training function, which involves acquiring training data, running the ML model, deriving the relevant loss, and adjusting the parameters of the ML model according to the calculated loss.

The ML Initial Training is ML model training for generating an initial version of the ML entity.

The ML Re-training is ML model training for generating a new version of the trained ML entity by using training data of the same type but with different values or distributions.

Note 3: The new version of the trained ML entity supports the same type of inference as the previous version of the ML entity, that is, the data type of the inference input and the data type of inference output remain unchanged between the two versions of the ML entity.

The ML Training refers to the end-to-end process that enables the ML training function to perform ML model initialization.

The ML Training Function is a logical function having ML modeling and training functions and is also referred to as a machine learning training (MLT) function.

The AI/ML Inference Function is a logical function that performs inference using the ML model and/or the AI decision entity.

In view of this, the embodiments of the present application provide an orchestration solution for a collaborative processing solution based on intent negotiation, which supports dynamically orchestrating the collaborative processing solution according to entity capability information, a current computing resource condition, and a target intent generated based on service requirement information.

It is to be noted that, in the embodiments of the present application, the first management device may be an MnS Consumer and the second management device may be an MnS Producer. For example, the MnS Consumer may include, but is not limited to, an ML training MnS Consumer or an AI/ML inference MnS Consumer; and the MnS Producer may include, but is not limited to, an ML training MnS Producer or an AI/ML inference MnS Producer. In an example, in the case where the ML training MnS Consumer is the CD-MnF, the ML training MnS Producer is the Domain-MnF. In an example, in the case where the AI/ML inference MnS Consumer is the CD-MnF, the AI/ML inference MnS Producer is the Domain-MnF.

In an embodiment, FIG. 3 is a flowchart of a solution orchestration method according to an embodiment of the present application. This embodiment is applicable to a case where a collaborative processing solution is automatically orchestrated. This embodiment may be implemented by a first management device. As shown in FIG. 3, this embodiment includes S310 to S330.

In S310, a target intent is generated according to received service requirement information.

The service requirement information is used for representing requirement information that satisfies a service function. Generally, the service requirement information may be expressed in the natural language and may be converted to obtain the target intent expressed in a structured language.

In S320, an intent negotiation request is sent to a second management device based on the target intent to request the second management device to return a candidate collaborative processing solution set.

The candidate collaborative processing solution set may include one or more candidate collaborative processing solutions. In an example, the candidate collaborative processing solution may include, but is not limited to, at least one of the following: a candidate collaborative training solution or a candidate collaborative inference solution. For example, the candidate collaborative training solution may include a candidate ML collaborative training solution; and the candidate collaborative inference solution may include a candidate AI/ML collaborative inference solution. After receiving the service requirement information, the first management device converts the service requirement information to generate the target intent, and sends the intent negotiation request to the second management device based on the target intent to request the second management device to return the candidate collaborative processing solution set that matches the target intent.

In an example, after receiving the target intent sent by the first management device, the second management device may dynamically determine the corresponding candidate collaborative processing solution set based on the target intent, pre-acquired entity capability information, and a current computing resource condition. The current computing resource condition is used for representing the usage condition of all computing resources managed by the second management device. For example, the second management device determines the collaborative processing solution set based on the computing resource condition of all central processing units (CPUs) or servers within a region.

In S330, intent negotiation with the second management device is performed based on the candidate collaborative processing solution set to determine a target collaborative processing solution set.

The target collaborative processing solution set may be a subset of the candidate collaborative processing solution set, that is, the number of collaborative processing solutions included in the target collaborative processing solution set is less than or equal to the number of collaborative processing solutions included in the candidate collaborative processing solution set. The target collaborative processing solution set is used for representing at least one target collaborative processing solution determined by the first management device. After the second management device returns the candidate collaborative processing solution set that matches the target intent, the first management device performs intent negotiation with the second management device based on the candidate collaborative processing solution set, and one or more candidate collaborative processing solutions selected by the first management device from the candidate collaborative processing solution set are combined into the corresponding target collaborative processing solution set so that the first management device can automatically determine the target collaborative processing solution based on the target intent. In an example, in the case where the first management device does not select one of the candidate collaborative processing solutions from the candidate collaborative processing solution set, the number of collaborative processing solutions included in the target collaborative processing solution set is zero.

In an embodiment, generating the target intent according to the received service requirement information includes converting the received service requirement information to generate the corresponding target intent, where the service requirement information includes at least an AI/ML requirement. In an example, the first management device converts the received AI/ML requirement (for example, the natural language) to generate the corresponding AI/ML requirement information (for example, the structured language), and then identifies and extracts an intent from the AI/ML requirement information, where the intent is used as the corresponding target intent.

In an embodiment, the type of the AI/ML requirement corresponding to the target intent includes at least one of the following: an inference requirement or a training requirement. In an example, the inference requirement may be an AI/ML inference requirement; and the training requirement may be an ML training requirement.

In an embodiment, the target intent includes at least one of the following parameters: an inference type, a model collaboration policy, a model version, an expected output result, input data, a used entity, or a model performance indicator.

The model performance indicator includes at least one of the following parameters: accuracy, precision, recall, a Precision-Recall (PR) curve, or an F1 score. The inference type is used for indicating the inference type of the entity and may generally be determined by the inference requirement or training requirement. For example, the inference type may include, but is not limited to, a Model Driven Architecture (MDA) type and an Analytic ID. The model collaboration policy is used for indicating the execution duration (for example, 10 hours) or execution time period (for example, from time point A to time point B) of the AI/ML model and may also be used for indicating the training duration (for example, 11 hours) or training time period (for example, from time point C to time point D) of the ML model. The model version is used for indicating the version information of the AI/ML model or ML model. The expected output result is used for indicating the inference result that the user expects and may generally be determined by the specific requirement information. The input data is used for indicating the input data or input data address provided by the user. The used entity is used for indicating the AI/ML entity or ML entity that is specified by the user and needs to be used. The model performance indicator is used for indicating the performance indicator of the AI/ML model or ML model.

In an embodiment, the target intent includes an intent negotiation type, and the intent negotiation type is used for indicating the type of the intent negotiation request. In an example, the first management device may send the target intent to the second management device implicitly, that is, the target intent is included in the intent negotiation request, and the intent negotiation type is included in the target intent. Then, the first management device sends the intent negotiation request to the second management device based on the intent negotiation type to request the second management device to return the candidate collaborative processing solution set that matches the intent negotiation type.

In an embodiment, the intent negotiation type includes at least one of the following: optimal parameter negotiation or specific policy negotiation. In an example, the optimal parameter negotiation is used for indicating the optimal value that can be obtained for at least one parameter in the target intent and a candidate collaborative processing solution set corresponding to the optimal value, which are returned by the second management device. For example, the optimal parameter may include, but is not limited to, one of the following: the shortest training time, the lowest training price, or the minimum energy consumption. In an example, the specific policy is used for indicating the candidate collaborative processing solution set generated based on the target intent and the specific policy and returned by the second management device. For example, the specific policy may include, but is not limited to, one of the following: the highest training accuracy policy or the best requirement matching policy.

In an embodiment, in the case where the intent negotiation type is the optimal parameter negotiation, the candidate collaborative processing solution set includes at least one of the following: the optimal value obtained for at least one parameter in the target intent, or the corresponding candidate collaborative processing solution. In an example, in the case where the intent negotiation type is the optimal parameter negotiation, the candidate collaborative processing solution set returned by the second management device to the first management device may include the optimal value obtained for at least one parameter in the target intent and may also include the optimal value obtained for at least one parameter in the target intent and the candidate collaborative processing solution corresponding to the optimal value.

In an embodiment, in the case where the intent negotiation type is the specific policy negotiation, the candidate collaborative processing solution set includes at least one candidate collaborative processing solution generated based on a specific policy.

In an embodiment, the intent negotiation request includes an intent negotiation operation; and sending the intent negotiation request to the second management device based on the target intent to request the second management device to return the candidate collaborative processing solution set includes the following:

The intent negotiation operation is initiated with the second management device based on the target intent to request the second management device to return the candidate collaborative processing solution set. In an example, the first management device may initiate intent negotiation with the second management device explicitly to request the second management device to return the candidate collaborative processing solution set.

In an embodiment, the intent negotiation operation includes at least one of the following: optimal parameter intent negotiation or specific policy intent negotiation. In an example, the first management device initiates the optimal parameter intent negotiation with the second management device based on the target intent to request the second management device to return the optimal parameter and the candidate collaborative processing solution corresponding to the optimal parameter. In an example, the first management device initiates the specific policy intent negotiation with the second management device based on the target intent to request the second management device to return at least one candidate collaborative processing solution.

In an embodiment, in the case where the optimal parameter intent negotiation is initiated, the candidate collaborative processing solution set includes at least one of the following: the optimal value obtained for at least one parameter in the target intent; or the corresponding candidate collaborative processing solution.

In an embodiment, in the case where the specific policy intent negotiation is initiated, the candidate collaborative processing solution set includes at least one candidate collaborative processing solution generated based on the specific policy.

In an embodiment, the solution orchestration method applied to the first management device further includes receiving solution validity period information for each candidate collaborative processing solution in the candidate collaborative processing solution set. In an example, the solution validity period information is used for representing the solution validity period corresponding to each candidate collaborative processing solution. For example, in the case where the AI/ML requirement is the ML training requirement, the candidate collaborative processing solution may be a candidate collaborative training solution. Correspondingly, the solution validity period information refers to the validity period of the expected shortest training time of the ML model.

In an embodiment, the solution validity period information corresponding to each candidate collaborative processing solution is unique; or the solution validity period information corresponding to all candidate collaborative processing solutions is the same. In an example, the second management device may set an independent and unique solution validity period for each candidate collaborative processing solution and may also set a common solution validity period for all candidate collaborative processing solutions.

In an embodiment, the solution orchestration method applied to the first management device further includes sending an intent negotiation response message to the second management device within the solution validity period corresponding to the solution validity period information, where the intent negotiation response message includes at least the determined target collaborative processing solution set, and the target collaborative processing solution set includes at least one candidate collaborative processing solution in the candidate collaborative processing solution set. After the second management device returns the candidate collaborative processing solution set to the first management device, the second management device starts a solution validity period timer and waits for the intent negotiation response message from the first management device. If the first management device selects at least one candidate collaborative processing solution from the candidate collaborative processing solution set within the solution validity period to generate the corresponding target collaborative processing solution set, the first management device sends the intent negotiation response message to the second management device within the solution validity period so that the second management device executes the target collaborative processing solution in the target collaborative processing solution set.

In an embodiment, the solution orchestration method applied to the first management device further includes receiving intent negotiation result information returned by the second management device.

In an embodiment, the intent negotiation result information includes at least one of the following: a negotiation result, negotiation success state information, negotiation failure state information, or a reason for a negotiation failure.

The negotiation failure state information includes at least one of the following: automatic solution execution, intent suspension, or an intent failure. In an example, the negotiation result may include one of the following: a negotiation success or a negotiation failure. In an example, in the case where the negotiation result is the negotiation success, the intent negotiation result information further includes the negotiation success state information. For example, the negotiation success state information may include, but is not limited to, one of the following: that the collaborative processing solution is being executed; or that the collaborative processing solution is pending execution. In an example, in the case where the negotiation result is the negotiation failure, the intent negotiation result information further includes the negotiation failure state information and the reason for the negotiation failure. In an example, the negotiation failure state information may include one of the following: automatic solution execution, intent suspension, or an intent failure. In an example, the reason for the negotiation failure may include no intent negotiation response message being received within the validity period.

In an embodiment, in the case where the negotiation failure state information is the intent suspension, the solution orchestration method applied to the first management device further includes: sending intent resumption indication information to the second management device; receiving a new candidate collaborative processing solution set re-orchestrated by the second management device based on the intent resumption indication information, the current computing resource condition, and the entity capability information; and determining at least one new target collaborative processing solution set from the new candidate collaborative processing solution set. The intent resumption indication information is used for requesting the resumption of the execution of the intent. In the case where the second management device does not receive the intent negotiation response message from the first management device within the solution validity period, the second management device may suspend the intent; then, the second management device may send the negotiation failure state information carrying the intent suspension to the first management device; then, the first management device may send the intent resumption indication information to the second management device to request the second management device to resume the execution of the intent; and the second management device redetermines a new candidate collaborative processing solution set based on the current computing resource condition, the intent resumption indication information, and the entity capability information and sends the new candidate collaborative processing solution set to the first management device so that the first management device can determine at least one new target collaborative processing solution set from the new candidate collaborative processing solution set. In an example, while the second management device sends the new candidate collaborative processing solution set to the first management device, the second management device may also send the solution validity period information corresponding to each new candidate collaborative processing solution to the first management device.

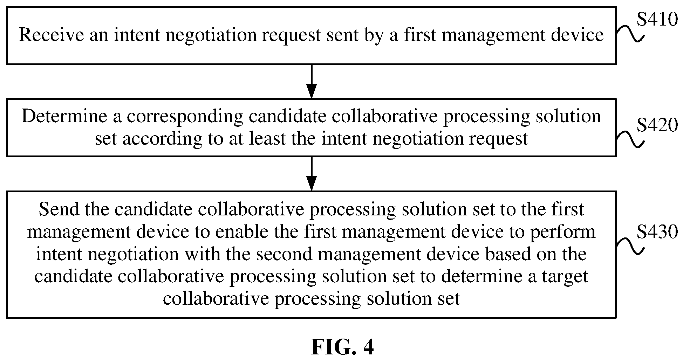

In an embodiment, FIG. 4 is a flowchart of another solution orchestration method according to an embodiment of the present application. This embodiment is applicable to a case where a collaborative processing solution is automatically orchestrated. This embodiment may be implemented by a second management device. As shown in FIG. 4, this embodiment includes S410 to S430.

In S410, an intent negotiation request sent by a first management device is received.

In S420, a corresponding candidate collaborative processing solution set is determined according to at least the intent negotiation request.

In S430, the candidate collaborative processing solution set is sent to the first management device to enable the first management device to perform intent negotiation with the second management device based on the candidate collaborative processing solution set to determine a target collaborative processing solution set.

In an embodiment, the solution orchestration method applied to the second management device further includes sending corresponding intent negotiation result information to the first management device. The intent negotiation result information is used for indicating the result of the intent negotiation between the first management device and the second management device. The intent negotiation result information includes at least one of the following: a negotiation result, negotiation success state information, negotiation failure state information, or a reason for a negotiation failure, where the negotiation failure state information includes at least one of the following: automatic solution execution, intent suspension, or an intent failure.

In an embodiment, the solution orchestration method applied to the second management device further includes acquiring entity capability information of each entity.

In an embodiment, the entity capability information includes at least one of the following: an entity identifier, an entity version, an entity inference type, an entity training context, or an entity performance indicator. In an example, the entity may include one of the following: an AI/ML entity or an ML entity. The entity identifier is used for indicating the unique identifier of each entity. The entity version is used for indicating the version information of each entity. The entity inference type is used for indicating the inference type of each entity, such as an MDA type and an Analytic ID. The entity training context includes training-related information of each entity, such as ML entity training time information, ML entity training resource consumption information, and ML entity training data information. The entity performance indicator includes the performance indicator supported by each entity, such as accuracy, precision, recall, a PR curve, and an F1 score.

In an embodiment, determining the corresponding candidate collaborative processing solution set according to at least the intent negotiation request includes: determining a corresponding solution orchestration policy according to a target intent in the intent negotiation request; and determining the corresponding candidate collaborative processing solution set according to the solution orchestration policy, the entity capability information, and the current computing resource condition. In an example, the solution orchestration policy is used for representing the entity used by each candidate collaborative processing solution and available computing resources (that is, the computing resources allocated by the second management device to each candidate collaborative processing solution). In the case where the first management device sends the target intent to the second management device implicitly, the target intent may be carried in the intent negotiation request so that the second management device can determine the corresponding solution orchestration policy according to the target intent and determine the corresponding candidate collaborative processing solution set according to the solution orchestration policy, the entity capability information, and the current computing resource condition.

In an embodiment, determining the corresponding candidate collaborative processing solution set according to at least the intent negotiation request includes: determining a corresponding solution orchestration policy according to a target intent and an intent negotiation operation in the intent negotiation request; and determining the corresponding candidate collaborative processing solution set according to the solution orchestration policy, the entity capability information, and the current computing resource condition. In an example, the first management device may initiate intent negotiation explicitly, that is, the first management device sends the target intent to the second management device and initiates the intent negotiation operation with the second management device, so that the second management device determines the corresponding solution orchestration policy according to the target intent and the intent negotiation operation. Moreover, the corresponding candidate collaborative processing solution set is determined according to the solution orchestration policy, the entity capability information, and the current computing resource condition.

In an embodiment, the solution orchestration method applied to the second management device further includes sending solution validity period information for each candidate collaborative processing solution in the candidate collaborative processing solution set to the first management device.

In an embodiment, the solution orchestration method applied to the second management device further includes: receiving an intent negotiation response message sent by the first management device within a solution validity period corresponding to the solution validity period information, where the intent negotiation response message includes at least the determined target collaborative processing solution set, and the target collaborative processing solution set includes at least one candidate collaborative processing solution in the candidate collaborative processing solution set; and executing at least one target collaborative processing solution in the target collaborative processing solution set.

In an embodiment, the solution orchestration method applied to the second management device further includes releasing computing resources unrelated to the target collaborative processing solution. If the second management device receives the intent negotiation response message sent by the first management device within the solution validity period, the second management device may execute the target collaborative processing solution in the target collaborative processing solution set determined by negotiation, and release the computing resources unrelated to the target collaborative processing solution, thereby making full use of the computing resources.

In an embodiment, in the case where the intent negotiation response message sent by the first management device is not received within the solution validity period corresponding to the solution validity period information, the solution orchestration method applied to the second management device further includes the following:

Corresponding negotiation failure state information is generated according to a pre-configured solution orchestration policy, where the negotiation failure state information includes at least one of the following: automatic solution execution, intent suspension, or an intent failure. If the second management device does not receive the intent negotiation response message sent by the first management device within the solution validity period, the second management device may automatically execute the originally determined target collaborative processing solution according to the pre-configured solution orchestration policy, or suspend the intent, or determine that the intent fails.

In an embodiment, in the case where the negotiation failure state information is the intent suspension, the solution orchestration method applied to the second management device further includes: receiving intent resumption indication information sent by the first management device; generating a new candidate collaborative processing solution set by performing re-orchestration based on the intent resumption indication information, the current computing resource condition, and the entity capability information; and sending the new candidate collaborative processing solution set to the first management device.

It is to be noted that, for the explanations of parameters such as the target intent, the candidate collaborative processing solution set, the target collaborative processing solution set, the intent negotiation result information, the entity capability information, and the intent resumption indication information in the corresponding embodiments of the solution orchestration method applied to the second management device, reference may be made to the descriptions of the corresponding parameters in the corresponding embodiments of the solution orchestration method applied to the first management device, and the details are not repeated here.

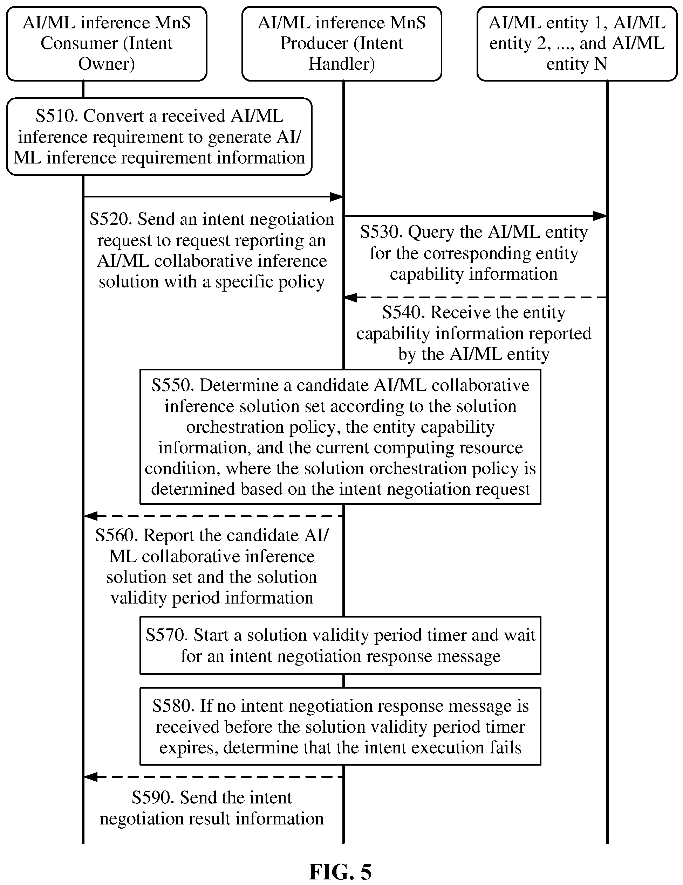

In an embodiment, FIG. 5 is a diagram illustrating interaction for solution orchestration according to an embodiment of the present application. The orchestration process of the collaborative processing solution is described using the following case as an example in which the first management device is the AI/ML inference MnS Consumer, the second management device is the AI/ML inference MnS Producer, the used entity is the AI/ML entity (including AI/ML entity 1, AI/ML entity 2, ..., and AI/ML entity N), the collaborative processing solution is the AI/ML collaborative inference solution, the service requirement information is the AI/ML inference requirement, and the target intent is the AI/ML inference requirement information. As shown in FIG. 5, the orchestration process of the collaborative processing solution in this embodiment includes the following:

In S510, a received AI/ML inference requirement is converted to generate AI/ML inference requirement information.

In an embodiment, the AI/ML inference MnS Consumer receives the AI/ML inference requirement and generates the AI/ML inference requirement information.

In S520, an intent negotiation request is sent to request reporting an AI/ML collaborative inference solution with a specific policy.

The specific policy may include, but is not limited to, the highest training accuracy policy and the best requirement matching policy. In an embodiment, the AI/ML inference MnS Consumer sends the intent negotiation request to the AI/ML inference MnS Producer. The intent negotiation request includes a target intent and an intent negotiation operation. The target intent may be the AI/ML inference requirement information, the intent negotiation operation is the specific policy intent negotiation, and the AI/ML inference MnS Producer is requested to feed back a feasible solution corresponding to the specific policy. The AI/ML inference MnS Consumer sends the specific policy intent negotiation and the AI/ML inference requirement information to the AI/ML inference MnS Producer.

In S530, the AI/ML entity is queried for the corresponding entity capability information.

In an embodiment, the AI/ML inference MnS Producer queries the AI/ML entity for the entity capability information of the AI/ML entity.

In S540, the entity capability information reported by the AI/ML entity is received.

In an embodiment, the AI/ML entity reports the entity capability information of the AI/ML entity to the AI/ML inference MnS Producer.

In S550, a candidate AI/ML collaborative inference solution set is determined according to the solution orchestration policy, the entity capability information, and the current computing resource condition, where the solution orchestration policy is determined based on the intent negotiation request.

In an embodiment, the AI/ML inference MnS Producer determines a potentially feasible candidate AI/ML collaborative inference solution set according to the AI/ML inference requirement information, the AI/ML entity capability information, and the current computing resource condition. The AI/ML inference MnS Producer orchestrates AI/ML entities to generate different solutions, while reserving relevant resources and setting solution validity period information.

In S560, the candidate AI/ML collaborative inference solution set and the solution validity period information are reported.

In an embodiment, the AI/ML inference MnS Producer responds to the intent negotiation and reports the candidate AI/ML collaborative inference solution set and the solution validity period information for each candidate AI/ML collaborative inference solution to the AI/ML inference MnS Consumer.

In S570, a solution validity period timer is started, and an intent negotiation response message is awaited.

In an embodiment, the AI/ML inference MnS Producer starts the solution validity period timer and waits for the intent negotiation response message from the AI/ML inference MnS Consumer.

In S580, if no intent negotiation response message is received before the solution validity period timer expires, it is determined that the intent execution fails.

In an embodiment, in the case where the AI/ML inference MnS Producer does not receive the intent negotiation response message before the solution validity period timer expires, it is determined that the intent execution fails.

In S590, the intent negotiation result information is sent.

In an embodiment, the AI/ML inference MnS Producer sends the intent negotiation result information to the AI/ML inference MnS Consumer. The intent negotiation result information includes a negotiation result, negotiation failure state information, and a reason for a negotiation failure. The negotiation result is a negotiation failure; the negotiation failure state is an intent execution failure; and the reason for the negotiation failure is that no intent negotiation response message is received within the validity period.

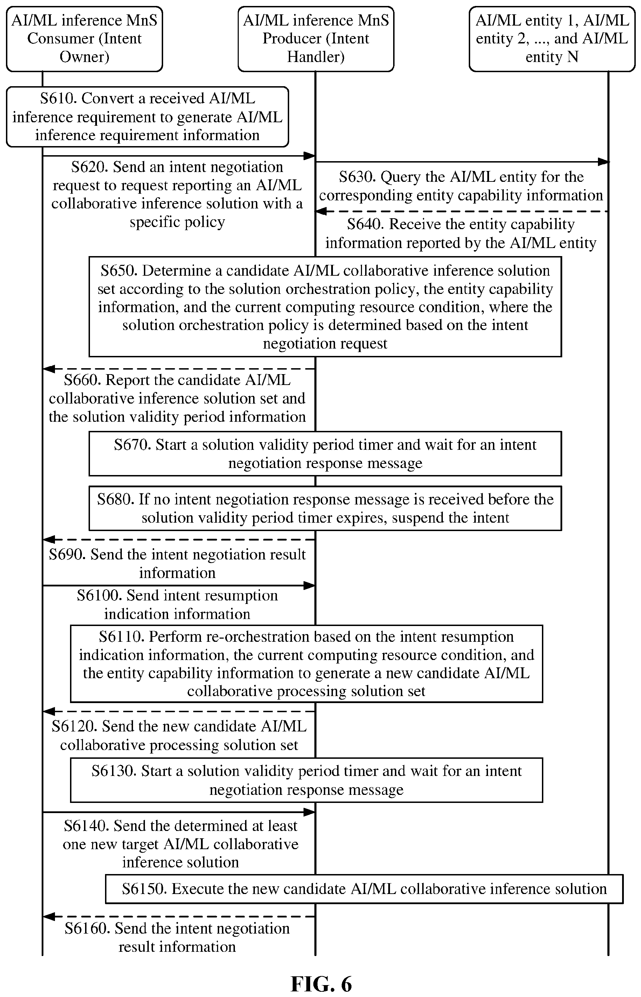

In an embodiment, FIG. 6 is another diagram illustrating interaction for solution orchestration according to an embodiment of the present application. The orchestration process of the collaborative processing solution is described using the following case as an example in which the first management device is the AI/ML inference MnS Consumer, the second management device is the AI/ML inference MnS Producer, the used entity is the AI/ML entity (including AI/ML entity 1, AI/ML entity 2, ..., and AI/ML entity N), the collaborative processing solution is the AI/ML collaborative inference solution, the service requirement information is the AI/ML inference requirement, and the target intent is the AI/ML inference requirement information. As shown in FIG. 6, the orchestration process of the collaborative processing solution in this embodiment includes the following:

In S610, a received AI/ML inference requirement is converted to generate AI/ML inference requirement information.

In an embodiment, the AI/ML inference MnS Consumer receives the AI/ML inference requirement and generates the AI/ML inference requirement information.

In S620, an intent negotiation request is sent to request reporting an AI/ML collaborative inference solution with a specific policy.

The specific policy may include, but is not limited to, the highest training accuracy policy and the best requirement matching policy. In an embodiment, the AI/ML inference MnS Consumer sends the intent negotiation request to the AI/ML inference MnS producer. The intent negotiation request includes a target intent and an intent negotiation operation. The target intent may be the AI/ML inference requirement information, the intent negotiation operation is the specific policy intent negotiation, and the AI/ML inference MnS Producer is requested to feed back a feasible solution corresponding to the specific policy. The AI/ML inference MnS Consumer sends the specific policy intent negotiation and the AI/ML inference requirement information to the AI/ML inference MnS Producer.

In S630, the AI/ML entity is queried for the corresponding entity capability information.

In an embodiment, the AI/ML inference MnS Producer queries the AI/ML entity for the entity capability information of the AI/ML entity.

In S640, the entity capability information reported by the AI/ML entity is received.

In an embodiment, the AI/ML entity reports the entity capability information of the AI/ML entity to the AI/ML inference MnS Producer.

In S650, a candidate AI/ML collaborative inference solution set is determined according to the solution orchestration policy, the entity capability information, and the current computing resource condition, where the solution orchestration policy is determined based on the intent negotiation request.

In an embodiment, the AI/ML inference MnS Producer determines a potentially feasible candidate AI/ML collaborative inference solution according to the AI/ML inference requirement information, the AI/ML entity capability information, and the current computing resource condition. The AI/ML inference MnS Producer orchestrates AI/ML entities to generate different solutions, while reserving relevant resources and setting solution validity period information.

In S660, the candidate AI/ML collaborative inference solution set and the solution validity period information are reported.

In an embodiment, the AI/ML inference MnS Producer responds to the intent negotiation and reports the candidate AI/ML collaborative inference solution set and the solution validity period information for each candidate AI/ML collaborative inference solution to the AI/ML inference MnS Consumer.

In S670, a solution validity period timer is started, and an intent negotiation response message is awaited.

In an embodiment, the AI/ML inference MnS Producer starts the solution validity period timer and waits for the intent negotiation response message from the AI/ML inference MnS Consumer.

In S680, if no intent negotiation response message is received before the solution validity period timer expires, the intent is suspended.

In an embodiment, if the AI/ML inference MnS Producer does not receive a response from the AI/ML inference MnS Consumer before the solution validity period timer expires, the intent is suspended (execution is postponed), and an intent suspension timer is set. If no intent negotiation response is received before the timer expires, it is determined that the intent fails.

In S690, the intent negotiation result information is sent.

In an embodiment, the AI/ML inference MnS Producer sends the intent negotiation result information to the AI/ML inference MnS Consumer. The intent negotiation result information includes a negotiation result, negotiation failure state information, and a reason for a negotiation failure. The negotiation result is a negotiation failure; the negotiation failure state is the intent suspension; and the reason for the negotiation failure is that no intent negotiation response is received within the validity period. The intent suspension timer is started, and a response from the AIML inference MnS Consumer is awaited.

In S6100, intent resumption indication information is sent.

In an embodiment, the AI/ML inference MnS Consumer sends the intent resumption indication information to the AI/ML inference MnS Producer to request the resumption of the execution of the intent.

In S6110, re-orchestration is performed based on the intent resumption indication information, the current computing resource condition, and the entity capability information to generate a new candidate AI/ML collaborative processing solution set.

In an embodiment, the AI/ML inference MnS Producer performs re-orchestration based on the current computing resource condition and the entity capability information to generate the new candidate AI/ML collaborative inference solution set.

In S6120, the new candidate AI/ML collaborative processing solution set is sent.

In an embodiment, the AI/ML inference MnS Producer initiates the intent negotiation again and reports the new candidate AI/ML collaborative inference solution set and the solution validity period information for each new candidate AI/ML collaborative inference solution to the AI/ML inference MnS Consumer.

In S6130, a solution validity period timer is started, and an intent negotiation response message is awaited.

In an embodiment, the AI/ML inference MnS Producer starts the solution validity period timer and waits for the intent negotiation response from the AI/ML inference MnS Consumer.

In S6140, the determined at least one new target AI/ML collaborative inference solution is sent.

In an embodiment, the AI/ML inference MnS Consumer selects at least one new candidate AI/ML collaborative inference solution from the new candidate AI/ML collaborative inference solution set as the corresponding new target AI/ML collaborative inference solution.

In S6150, the new candidate AI/ML collaborative inference solution is executed.

In an embodiment, the AI/ML inference MnS Producer executes the selected new candidate AI/ML collaborative inference solution and releases resources unrelated to the solution.

In S6160, the intent negotiation result information is sent.

In an embodiment, the AI/ML inference MnS Producer sends the intent negotiation result information to the AI/ML inference MnS Consumer. The intent negotiation result information includes a negotiation result, negotiation failure state information, and a reason for a negotiation failure. The negotiation result is a negotiation success; and the negotiation success state information is that the AI/ML model collaborative inference solution is being executed.

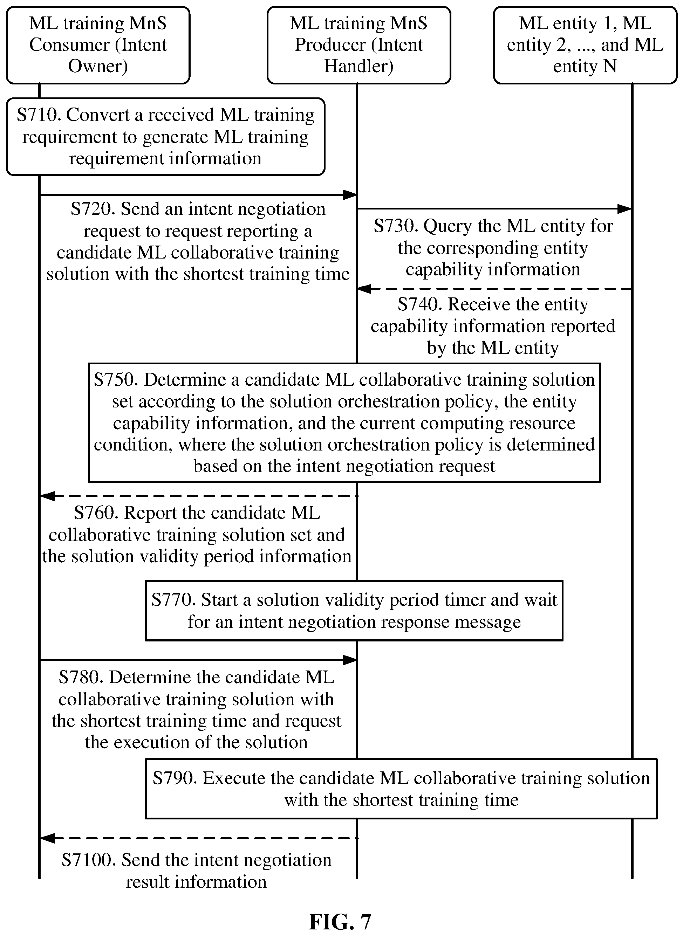

In an embodiment, FIG. 7 is another diagram illustrating interaction for solution orchestration according to an embodiment of the present application. The orchestration process of the collaborative processing solution is described using the following case as an example in which the first management device is the ML training MnS Consumer, the second management device is the ML training MnS Producer, the used entity is the ML entity (including ML entity 1, ML entity 2, ..., and ML entity N), the collaborative processing solution is the ML collaborative training solution, the service requirement information is the ML training requirement, and the target intent is the ML training requirement information. As shown in FIG. 7, the orchestration process of the collaborative processing solution in this embodiment includes the following:

In S710, a received ML training requirement is converted to generate ML training requirement information.

In an embodiment, the ML training MnS Consumer receives the ML model training requirement and generates the ML model training requirement information.

In S720, an intent negotiation request is sent to request reporting a candidate ML collaborative training solution with the shortest training time.

In an embodiment, the ML training MnS Consumer sends the intent negotiation request. The intent negotiation request includes the target intent, the target intent includes an intent negotiation type, and the intent negotiation type is the optimal parameter negotiation, that is, the shortest training time. It is to be understood that the target intent may include the ML training requirement information and the shortest training time, and may request the candidate ML collaborative training solution with the shortest training time. The ML training MnS Consumer sends the ML training requirement information and the shortest training time to the ML training MnS Producer.

In S730, the ML entity is queried for the corresponding entity capability information.

In an embodiment, the ML training MnS Producer queries each ML entity for the entity capability information of the ML entity.

In S740, the entity capability information reported by the ML entity is received.

In an embodiment, each ML entity reports the entity capability information of the ML entity to the ML training MnS Producer.

In S750, a candidate ML collaborative training solution set is determined according to the solution orchestration policy, the entity capability information, and the current computing resource condition, where the solution orchestration policy is determined based on the intent negotiation request.

In an embodiment, the ML training MnS Producer determines a feasible candidate ML collaborative training solution set according to the ML model training requirement, the ML entity capability information, and the current computing resource condition. The training time of each candidate ML collaborative training solution is evaluated to determine the candidate ML collaborative training solution with the shortest training time, relevant resources are reserved, and the value validity period information, which is the validity period of the shortest training time, is set.

In S760, the candidate ML collaborative training solution set and the solution validity period information are reported.

In an embodiment, the ML training MnS Producer reports the shortest training time and the corresponding candidate ML collaborative training solution, including the solution validity period information, to the ML training MnS Consumer.

According to the request from the MnS Consumer, the MnS Producer can feed back the optimal value that a certain parameter can achieve (such as a Key Performance Indicator (KPI)). In this example, the ML training MnS Producer reports the shortest training time.

In S770, a solution validity period timer is started, and an intent negotiation response message is awaited.

In an embodiment, the ML training MnS Producer starts the solution validity period timer and waits for the intent negotiation response message from the ML training MnS Consumer.

In S780, the candidate ML collaborative training solution with the shortest training time is determined and the execution of the solution is requested.

In an embodiment, the ML training MnS Consumer requests the execution of the ML collaborative training solution corresponding to the shortest training time, which is used as the target ML collaborative training solution.

In S790, the candidate ML collaborative training solution with the shortest training time is executed.

In an embodiment, the ML training MnS Producer executes the candidate ML collaborative training solution with the shortest training time.

In S7100, the intent negotiation result information is sent.

In an embodiment, the ML training MnS Producer sends the intent negotiation result information to the ML training MnS Consumer. The intent negotiation result information includes a negotiation result, negotiation failure state information, and a reason for a negotiation failure. The negotiation result is a negotiation success; and the negotiation success state information is that the ML model collaborative training solution is being executed.

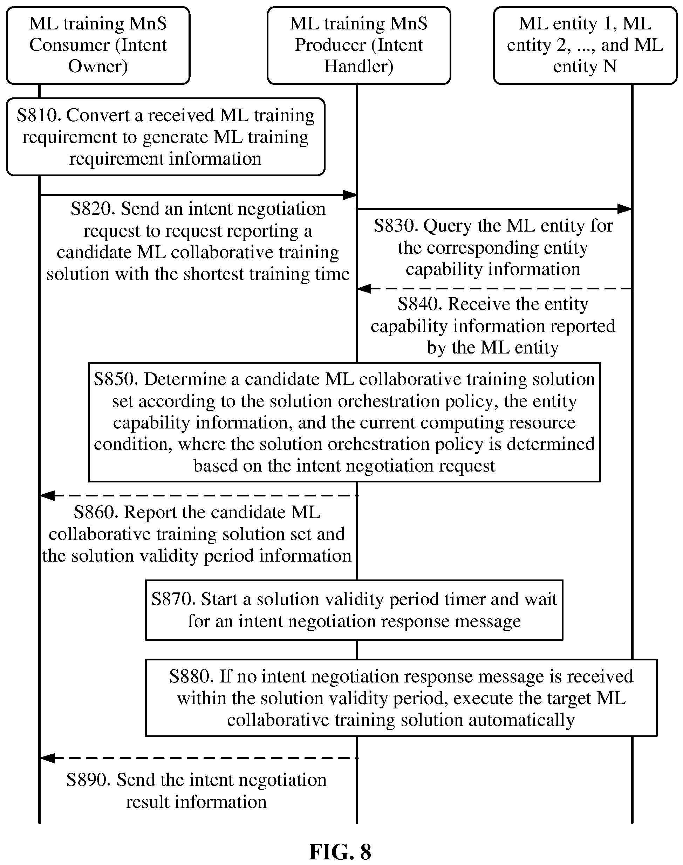

In an embodiment, FIG. 8 is another diagram illustrating interaction for solution orchestration according to an embodiment of the present application. The orchestration process of the collaborative processing solution is described using the following case as an example in which the first management device is the ML training MnS Consumer, the second management device is the ML training MnS Producer, the used entity is the ML entity (including ML entity 1, ML entity 2, ..., and ML entity N), the collaborative processing solution is the ML collaborative training solution, the service requirement information is the ML training requirement, and the target intent is the ML training requirement information. As shown in FIG. 8, the orchestration process of the collaborative processing solution in this embodiment includes the following:

In S810, a received ML training requirement is converted to generate ML training requirement information.

In an embodiment, the ML training MnS Consumer receives the ML model training requirement and generates the ML model training requirement information.

In S820, an intent negotiation request is sent to request reporting a candidate ML collaborative training solution with the shortest training time.

In an embodiment, the ML training MnS Consumer sends the intent negotiation request. The intent negotiation request includes the target intent, the target intent includes an intent negotiation type, and the intent negotiation type is the optimal parameter negotiation, that is, the shortest training time. It is to be understood that the target intent may include the ML training requirement information and the shortest training time, and may request reporting the candidate ML collaborative training solution with the shortest training time. The ML training MnS Consumer sends the ML training requirement information and the shortest training time to the ML training MnS Producer.

In S830, the ML entity is queried for the corresponding entity capability information.

In an embodiment, the ML training MnS Producer queries each ML entity for the entity capability information of the ML entity.

In S840, the entity capability information reported by the ML entity is received.

In an embodiment, each ML entity reports the entity capability information of the ML entity to the ML training MnS Producer.

In S850, a candidate ML collaborative training solution set is determined according to the solution orchestration policy, the entity capability information, and the current computing resource condition, where the solution orchestration policy is determined based on the intent negotiation request.

In an embodiment, the ML training MnS Producer determines a feasible ML model collaborative training solution according to the ML model training requirement information, the ML entity capability information, and the current resource condition. The training time of each solution is evaluated to determine the solution with the shortest training time, relevant resources are reserved, and the value validity period information, which is the validity period of the shortest training time, is set.

In S860, the candidate ML collaborative training solution set and the solution validity period information are reported.

In an embodiment, the ML training MnS Producer reports the shortest model training time and the corresponding training solution, including the value validity period information, to the ML training MnS Consumer.

In S870, a solution validity period timer is started, and an intent negotiation response message is awaited.

In an embodiment, the ML training MnS Producer starts the value validity period timer and waits for the intent negotiation response from the ML training MnS Consumer.

In S880, if no intent negotiation response message is received within the solution validity period, the target ML collaborative training solution is executed automatically.

In an embodiment, no intent negotiation response is received within the value validity period. The ML training MnS Producer automatically executes the ML model collaborative training solution corresponding to the shortest training time.

In S890, the intent negotiation result information is sent.

In an embodiment, the ML training MnS Producer sends the intent negotiation result information to the ML training MnS Consumer. The intent negotiation result information includes a negotiation result, negotiation failure state information, and a reason for a negotiation failure. The negotiation result is a negotiation failure; the negotiation failure state information is that the ML model collaborative training solution is executed automatically; and the reason for the negotiation failure is that no intent negotiation response is received within the validity period.

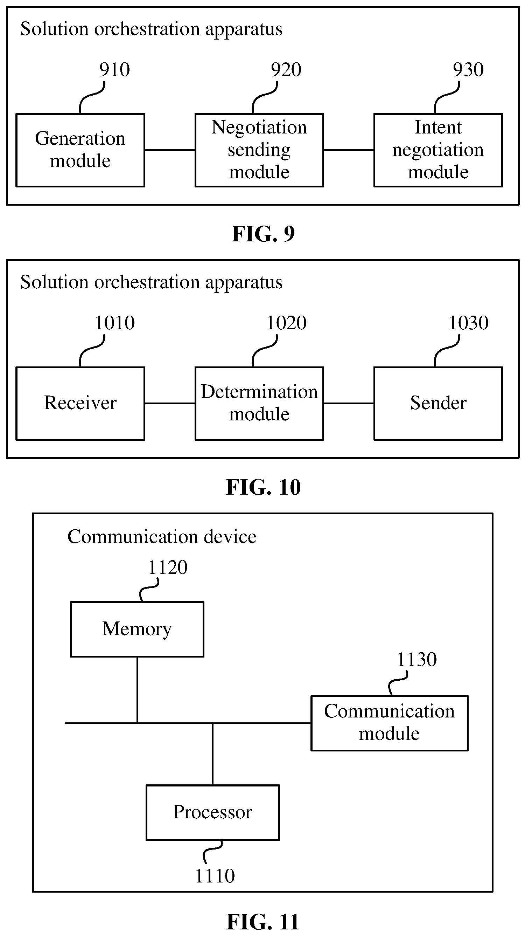

In an embodiment, FIG. 9 is a block diagram of a solution orchestration apparatus according to an embodiment of the present application. This embodiment is applied to a first management device. As shown in FIG. 9, the solution orchestration apparatus in this embodiment includes a generation module 910, a negotiation sending module 920, and an intent negotiation module 930.

The generation module 910 is configured to generate a target intent according to received service requirement information.

The negotiation sending module 920 is configured to send an intent negotiation request to a second management device based on the target intent to request the second management device to return a candidate collaborative processing solution set.

The intent negotiation module 930 is configured to perform intent negotiation with the second management device based on the candidate collaborative processing solution set to determine a target collaborative processing solution set.

In an embodiment, the generation module 910 is configured to convert the received service requirement information to generate the corresponding target intent, where the service requirement information includes at least an AI/ML requirement.

In an embodiment, the type of the AI/ML requirement corresponding to the target intent includes at least one of the following: an inference requirement or a training requirement.

In an embodiment, the target intent includes at least one of the following parameters: an inference type, a model collaboration policy, a model version, an expected output result, input data, a used entity, or a model performance indicator.

The model performance indicator includes at least one of the following parameters: accuracy, precision, recall, a PR curve, or an F1 score.

In an embodiment, the target intent includes an intent negotiation type, and the intent negotiation type is used for indicating the type of the intent negotiation request.

In an embodiment, the intent negotiation type includes at least one of the following: optimal parameter negotiation or specific policy negotiation.

In an embodiment, in the case where the intent negotiation type is the optimal parameter negotiation, the candidate collaborative processing solution set includes at least one of the following: an optimal value obtained for at least one parameter in the target intent; or a corresponding candidate collaborative processing solution.

In an embodiment, in the case where the intent negotiation type is the specific policy negotiation, the candidate collaborative processing solution set includes at least one candidate collaborative processing solution generated based on a specific policy.

In an embodiment, the intent negotiation request includes an intent negotiation operation; and the negotiation sending module 920 is configured to initiate the intent negotiation operation with the second management device based on the target intent to request the second management device to return the candidate collaborative processing solution set.

In an embodiment, the intent negotiation operation includes at least one of the following: optimal parameter intent negotiation or specific policy intent negotiation.

In an embodiment, in the case where the optimal parameter intent negotiation is initiated, the candidate collaborative processing solution set includes at least one of the following: an optimal value obtained for at least one parameter in the target intent; or a corresponding candidate collaborative processing solution.

In an embodiment, in the case where the specific policy intent negotiation is initiated, the candidate collaborative processing solution set includes at least one candidate collaborative processing solution generated based on a specific policy.

In an embodiment, the solution orchestration apparatus applied to the first management device further includes a receiver.

The receiver is configured to receive solution validity period information for each candidate collaborative processing solution in the candidate collaborative processing solution set.

In an embodiment, the solution validity period information corresponding to each candidate collaborative processing solution is unique; or the solution validity period information corresponding to all candidate collaborative processing solutions is the same.

In an embodiment, the solution orchestration apparatus applied to the first management device further includes a sender.

The sender is configured to send an intent negotiation response message to the second management device within the solution validity period corresponding to the solution validity period information, where the intent negotiation response message includes at least the determined target collaborative processing solution set, and the target collaborative processing solution set includes at least one candidate collaborative processing solution in the candidate collaborative processing solution set.

In an embodiment, the solution orchestration apparatus applied to the first management device further includes a receiver.

The receiver is further configured to receive intent negotiation result information returned by the second management device.

In an embodiment, the intent negotiation result information includes at least one of the following: a negotiation result, negotiation success state information, negotiation failure state information, or a reason for a negotiation failure.

The negotiation failure state information includes at least one of the following: automatic solution execution, intent suspension, or an intent failure.

In an embodiment, in the case where the negotiation failure state information is the intent suspension, the solution orchestration apparatus applied to the first management device further includes a sender, a receiver, and a determination module.

The sender is further configured to send intent resumption indication information to the second management device.

The receiver is further configured to receive a new candidate collaborative processing solution set re-orchestrated by the second management device based on the intent resumption indication information, the current computing resource condition, and the entity capability information.

The determination module is configured to determine at least one new target collaborative processing solution set from the new candidate collaborative processing solution set.

The solution orchestration apparatus of this embodiment is configured to perform the solution orchestration method applied to the first management device according to the embodiment shown in FIG. 3. The implementation principles and technical effects of the solution orchestration apparatus of this embodiment are similar to those of the solution orchestration method applied to the first management device and thus are not repeated here.

In an embodiment, FIG. 10 is a block diagram of another solution orchestration apparatus according to an embodiment of the present application. This embodiment is applied to a second management device. As shown in FIG. 10, the solution orchestration apparatus in this embodiment includes a receiver 1010, a determination module 1020, and a sender 1030.

The receiver 1010 is configured to receive an intent negotiation request sent by a first management device.

The determination module 1020 is configured to determine a corresponding candidate collaborative processing solution set according to at least the intent negotiation request.

The sender 1030 is configured to send the candidate collaborative processing solution set to the first management device to enable the first management device to perform intent negotiation with the second management device based on the candidate collaborative processing solution set to determine a target collaborative processing solution set.

In an embodiment, the solution orchestration apparatus applied to the second management device further includes the sender 1030.

The sender 1030 is further configured to send corresponding intent negotiation result information to the first management device.

In an embodiment, the solution orchestration apparatus applied to the second management device further includes an acquisition module.

The acquisition module is configured to acquire entity capability information of each entity.

In an embodiment, the determination module 1020 includes a first determination unit and a second determination unit.

The first determination unit is configured to determine a corresponding solution orchestration policy according to a target intent in the intent negotiation request.

The second determination unit is configured to determine the corresponding candidate collaborative processing solution set according to the solution orchestration policy, the entity capability information, and the current computing resource condition.

In an embodiment, the determination module 1020 includes a third determination unit and a fourth determination unit.

The third determination unit is configured to determine a corresponding solution orchestration policy according to a target intent and an intent negotiation operation in the intent negotiation request.

The fourth determination unit is configured to determine the corresponding candidate collaborative processing solution set according to the solution orchestration policy, the entity capability information, and the current computing resource condition.

In an embodiment, the entity capability information includes at least one of the following: an entity identifier, an entity version, an entity inference type, an entity training context, or an entity performance indicator.

In an embodiment, the solution orchestration apparatus applied to the second management device further includes the sender 1030.

The sender 1030 is further configured to send solution validity period information for each candidate collaborative processing solution in the candidate collaborative processing solution set to the first management device.

In an embodiment, the solution orchestration apparatus applied to the second management device further includes the receiver 1010 and an executor.

The receiver 1010 is further configured to receive an intent negotiation response message sent by the first management device within the solution validity period corresponding to the solution validity period information, where the intent negotiation response message includes at least the determined target collaborative processing solution set, and the target collaborative processing solution set includes at least one candidate collaborative processing solution in the candidate collaborative processing solution set.

The executor is configured to execute at least one target collaborative processing solution in the target collaborative processing solution set.

In an embodiment, the solution orchestration apparatus applied to the second management device further includes a releasing module configured to release computing resources unrelated to the target collaborative processing solution.

In an embodiment, in the case where the intent negotiation response message sent by the first management device is not received within the solution validity period corresponding to the solution validity period information, the solution orchestration apparatus applied to the second management device further includes a generation module.

The generation module is configured to generate corresponding negotiation failure state information according to a pre-configured solution orchestration policy, where the negotiation failure state information includes at least one of the following: automatic solution execution, intent suspension, or an intent failure.

In an embodiment, in the case where the negotiation failure state information is the intent suspension, the solution orchestration apparatus applied to the second management device further includes the receiver 1010, a generation module, and the sender 1030.

The receiver 1010 is further configured to receive intent resumption indication information sent by the first management device.

The generation module is further configured to generate a new candidate collaborative processing solution set by performing re-orchestration based on the intent resumption indication information, the current computing resource condition, and the entity capability information.

The sender 1030 is further configured to send the new candidate collaborative processing solution set to the first management device.

The solution orchestration apparatus of this embodiment is configured to perform the solution orchestration method applied to the second management device according to the embodiment shown in FIG. 4. The implementation principles and technical effects of the solution orchestration apparatus of this embodiment are similar to those of the solution orchestration method applied to the second management device and thus are not repeated here.

In an embodiment, FIG. 11 is a diagram illustrating the structure of a communication device according to an embodiment of the present application. As shown in FIG. 11, the device of the present application includes a processor 1110, a memory 1120, and a communication module 1130. One or more processors 1110 may be provided in the device. FIG. 11 shows one processor 1110 as an example. One or more memories 1120 may be provided in the device. FIG. 11 shows one memory 1120 as an example. The processor 1110, the memory 1120, and the communication module 1130 of the device may be connected by a bus or otherwise. FIG. 11 shows the connection by a bus as an example. In this embodiment, the device may be a first management device or a second management device.

As a computer-readable storage medium, the memory 1120 may be configured to store software programs, computer-executable programs, and modules, such as program instructions/modules (for example, the generation module 910, the negotiation sending module 920, and the intent negotiation module 930 in the solution orchestration apparatus applied to the first management device) corresponding to the device according to any embodiment of the present application. The memory 1120 may include a program storage region and a data storage region. The program storage region may store an operating system and an application program required by at least one function. The data storage region may store data created depending on the use of the device. Additionally, the memory 1120 may include a high-speed random-access memory and may also include a nonvolatile memory such as at least one disk memory, a flash memory, or another nonvolatile solid-state memory. In some examples, the memory 1120 may be remote relative to the processor 1110 and connectable to the device via a network. Examples of the network include, but are not limited to, the Internet, an intranet, a local area network, a mobile communication network, and a combination thereof.

In the case where the communication device is the first management device, the device may be configured to perform the solution orchestration method applied to the first management device according to any previous embodiment and has corresponding functions and effects.

In the case where the communication device is the second management device, the device may be configured to perform the solution orchestration method applied to the second management device according to any previous embodiment and has corresponding functions and effects.

The embodiments of the present application further provide a storage medium including computer-executable instructions which, when executed by a computer processor, cause the computer processor to perform a solution orchestration method applied to a first management device. The method includes: generating a target intent according to received service requirement information; sending an intent negotiation request to a second management device based on the target intent to request the second management device to return a candidate collaborative processing solution set; and performing intent negotiation with the second management device based on the candidate collaborative processing solution set to determine a target collaborative processing solution set.

The embodiments of the present application further provide a storage medium including computer-executable instructions which, when executed by a computer processor, cause the computer processor to perform a solution orchestration method applied to a second management device. The method includes: receiving an intent negotiation request sent by a first management device; determining a corresponding candidate collaborative processing solution set according to at least the intent negotiation request; and sending the candidate collaborative processing solution set to the first management device to enable the first management device to perform intent negotiation with the second management device based on the candidate collaborative processing solution set to determine a target collaborative processing solution set.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, multiple embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes optional embodiments of the present application that are not intended to limit the present application. For those skilled in the art, the present application may have various modifications and variations. Any modifications, equivalent substitutions, and improvements made within the spirit and principle of the present application are within the scope of the present application.

## Claims

1. A solution orchestration method, which is applied to a first management device, comprising:
generating a target intent according to received service requirement information;
sending an intent negotiation request to a second management device based on the target intent to request the second management device to return a candidate collaborative processing solution set; and
performing intent negotiation with the second management device based on the candidate collaborative processing solution set to determine a target collaborative processing solution set.

2. The method of claim 1, wherein generating the target intent according to the received service requirement information comprises:
converting the received service requirement information to generate the corresponding target intent, wherein the service requirement information comprises at least an artificial intelligence/machine learning (AI/ML) requirement.

3. The method of claim 2, wherein a type of the AI/ML requirement corresponding to the target intent comprises at least one of the following: an inference requirement or a training requirement.

4. The method of claim 1, wherein the target intent comprises at least one of the following parameters: an inference type, a model collaboration policy, a model version, an expected output result, input data, a used entity, or a model performance indicator;
wherein the model performance indicator comprises at least one of the following parameters: accuracy, precision, recall, a Precision-Recall (PR) curve, or an F1 score.

5. The method of claim 1, wherein the target intent comprises an intent negotiation type, and the intent negotiation type is used for indicating a type of the intent negotiation request.

6. The method of claim 5, wherein the intent negotiation type comprises at least one of the following: optimal parameter negotiation or specific policy negotiation.

7. The method of claim 6, wherein in response to the intent negotiation type being the optimal parameter negotiation, the candidate collaborative processing solution set comprises at least one of the following: an optimal value obtained for at least one parameter in the target intent; or a corresponding candidate collaborative processing solution.

8. The method of claim 6, wherein in response to the intent negotiation type being the specific policy negotiation, the candidate collaborative processing solution set comprises at least one candidate collaborative processing solution generated based on a specific policy.

9. The method of claim 1, wherein the intent negotiation request comprises an intent negotiation operation; and sending the intent negotiation request to the second management device based on the target intent to request the second management device to return the candidate collaborative processing solution set comprises the following:
initiating the intent negotiation operation with the second management device based on the target intent to request the second management device to return the candidate collaborative processing solution set.

10. The method of claim 9, wherein the intent negotiation operation comprises at least one of the following: optimal parameter intent negotiation or specific policy intent negotiation.

11. The method of claim 10, wherein in response to the optimal parameter intent negotiation being initiated, the candidate collaborative processing solution set comprises at least one of the following: an optimal value obtained for at least one parameter in the target intent; or a corresponding candidate collaborative processing solution.

12. The method of claim 10, wherein in response to the specific policy intent negotiation being initiated, the candidate collaborative processing solution set comprises at least one candidate collaborative processing solution generated based on a specific policy.

13. The method of claim 1, further comprising:
receiving solution validity period information for each candidate collaborative processing solution in the candidate collaborative processing solution set.

14. The method of claim 13, wherein the solution validity period information corresponding to each candidate collaborative processing solution is unique; or solution validity period information corresponding to all candidate collaborative processing solutions is the same.

15. The method of claim 13, further comprising:
sending an intent negotiation response message to the second management device within a solution validity period corresponding to the solution validity period information, wherein the intent negotiation response message comprises at least the determined target collaborative processing solution set, and the target collaborative processing solution set comprises at least one candidate collaborative processing solution in the candidate collaborative processing solution set.

16. The method of any one of claims 1 to 15, further comprising:
receiving intent negotiation result information returned by the second management device.

17. The method of claim 16, wherein the intent negotiation result information comprises at least one of the following: a negotiation result, negotiation success state information, negotiation failure state information, or a reason for a negotiation failure;
wherein the negotiation failure state information comprises at least one of the following: automatic solution execution, intent suspension, or an intent failure.

18. The method of claim 17, wherein in response to the negotiation failure state information being the intent suspension, the method further comprises:
sending intent resumption indication information to the second management device;
receiving a new candidate collaborative processing solution set re-orchestrated by the second management device based on the intent resumption indication information, a current computing resource condition, and entity capability information; and
determining at least one new target collaborative processing solution from the new candidate collaborative processing solution set.

19. A solution orchestration method, which is applied to a second management device, comprising:
receiving an intent negotiation request sent by a first management device;
determining a corresponding candidate collaborative processing solution set according to at least the intent negotiation request; and
sending the candidate collaborative processing solution set to the first management device to enable the first management device to perform intent negotiation with the second management device based on the candidate collaborative processing solution set to determine a target collaborative processing solution set.

20. The method of claim 19, further comprising:
sending corresponding intent negotiation result information to the first management device.

21. The method of claim 19, further comprising:
acquiring entity capability information of each entity.

22. The method of claim 21, wherein determining the corresponding candidate collaborative processing solution set according to at least the intent negotiation request comprises:
determining a corresponding solution orchestration policy according to a target intent in the intent negotiation request; and
determining the corresponding candidate collaborative processing solution set according to the solution orchestration policy, the entity capability information, and a current computing resource condition.

23. The method of claim 21, wherein determining the corresponding candidate collaborative processing solution set according to at least the intent negotiation request comprises:
determining a corresponding solution orchestration policy according to a target intent and an intent negotiation operation in the intent negotiation request; and
determining the corresponding candidate collaborative processing solution set according to the solution orchestration policy, the entity capability information, and a current computing resource condition.

24. The method of claim 21, wherein the entity capability information comprises at least one of the following: an entity identifier, an entity version, an entity inference type, an entity training context, or an entity performance indicator.

25. The method of claim 19, further comprising:
sending solution validity period information for each candidate collaborative processing solution in the candidate collaborative processing solution set to the first management device.

26. The method of claim 25, further comprising:
receiving an intent negotiation response message sent by the first management device within a solution validity period corresponding to the solution validity period information, wherein the intent negotiation response message comprises at least the determined target collaborative processing solution set, and the target collaborative processing solution set comprises at least one candidate collaborative processing solution in the candidate collaborative processing solution set; and
executing at least one target collaborative processing solution in the target collaborative processing solution set.

27. The method of claim 26, further comprising:
releasing computing resources unrelated to the at least one target collaborative processing solution.

28. The method of claim 25, wherein in response to an intent negotiation response message sent by the first management device being not received within a solution validity period corresponding to the solution validity period information, the method further comprises:
generating corresponding negotiation failure state information according to a pre-configured solution orchestration policy, wherein the negotiation failure state information comprises at least one of the following: automatic solution execution, intent suspension, or an intent failure.

29. The method of claim 28, wherein in response to the negotiation failure state information being the intent suspension, the method further comprises:
receiving intent resumption indication information sent by the first management device;
generating a new candidate collaborative processing solution set by performing re-orchestration based on the intent resumption indication information, a current computing resource condition, and entity capability information; and
sending the new candidate collaborative processing solution set to the first management device.

30. A management device, comprising a memory and one or more processors;
wherein the memory is configured to store one or more programs;
wherein the one or more programs, when executed by the one or more processors, cause the one or more processors to perform the method of any one of claims 1 to 18 or the method of any one of claims 19 to 29.

31. A storage medium storing a computer program which, when executed by a processor, causes the processor to perform the method of any one of claims 1 to 18 or the method of any one of claims 19 to 29.
